# EUROPEAN PATENT SPECIFICATION

(11) **EP 1 946 819 B1**
(45) Date of publication and mention of the grant of the patent: **10.11.2010**
(21) Application number: 07254982.7
(22) Date of filing: 20.12.2007
(51) Int. Cl.: B01D 53/26

(54) **Pre-emptive air dryer control in a compressed air system**
Vorentleerende Lufttrocknersteuerung in Druckluftsystem
Contrôle de dessiccation d'air préemptive dans un système d'air comprimé

(30) Priority: 19.01.2007 US 881307 P; 02.11.2007 US 934104
(43) Date of publication of application: 23.07.2008
(73) Proprietor: INGERSOLL-RAND COMPANY, Montvale, NJ 07645 (US)
(72) Inventor: Levan, Jimmy L., Statesville NC 28677 (US); Mistry, Vipul R., Charlotte NC 28214 (US)
(74) Representative: Every, David Aidan

(56) References cited:
- WO-A-2006/133522
- DE-A1- 4 027 838
- DE-C1- 19 943 109
- US-A1- 2005 067 137

## Description

### BACKGROUND

The present invention relates to a compressor system, including an air dryer, and more particularly to a compressor system including as air dryer having a pre-emptive air dryer control.

Air dryers are typically used in compressed air systems to remove water, lubricant, water and lubricant vapors and other contaminants from the air after the air is compressed and discharged from the air compressor. There are a variety of air dryers available to accomplish this function.

One type of air dryer is a cycling refrigerated dryer which cycles on and off to maintain its refrigerant at a specified temperature for cooling the compressed air. These air dryers are typically turned on and off with the air compressor such that the air dryer is started and stopped by the air compressor controls. In this manner, the air dryer remains off as long as the air compressor drive (e.g., motor, engine, etc.) is not running. Likewise, the air dryer is started when the air compressor is started.
International patent application number PCT/BE2006/000041, published as WO 2006/133522 A1, discloses a method for cool drying gas, in particular air, which consists of switching a cooling circuit on and off on the basis of temperature measurements.

### SUMMARY

According to a first aspect of the present invention, there is provided a fluid compression system comprising: a compressor operable to produce a first flow of compressed fluid; a refrigerated dryer coupled to the compressor and operable to separate the first flow of compressed fluid into a second flow of compressed fluid and a flow of liquid; a point-of-use positioned to receive and store the second flow of compressed fluid for use; a first sensor positioned to measure a pressure of the second flow of compressed fluid stored at the point-of-use; and a controller operable to initiate operation of the refrigerated dryer at a first time and at least partially in response to the measured pressure, and to initiate operation of the compressor at a second time, wherein the first time is before the second time.

Some air compressor systems supply air to a process intermittently and as such, the air compressor and dryer may be turned off for long periods of time. When the air compressor and dryer have been turned off for a long period of time, the dryer's refrigerant temperature can rise significantly above its optimum operating value. When compressed air is needed, the air compressor and the air dryer are restarted. However, after being turned off for a long period, it takes the air dryer a certain amount of time to cool its refrigerant back to its optimum operating temperature and to effectively remove moisture and contaminants from the compressed air. During the time period the air dryer refrigerant is being cooled, some amount of air supplied to the air system may not be dried to a desired level.

One construction of the invention provides a fluid compression system that includes a compressor, a refrigerated dryer, a sensor, and a controller. The compressor produces a flow of compressed fluid, which in the preferred construction is air which may contain water vapor or other fluid (c.g. lubricant). After the compressed air leaves the compressor it is considered wet air due to the presence of water vapor. The wet air is then cooled by the refrigerated dryer and the wet air is split into a second flow of compressed fluid (dry air) and a flow of fluid (water). The water is expelled from the system and the dry air passed to a point of use, which may be a storage tank, air hammer, etc. The sensor is positioned such that it measures a pressure of the system at the point of use and the controller initiates and stops the compressor and the refrigerated dryer at least partially in response to the pressure measured by the sensor. The refrigerated dryer starts prior to the compressor such that no wet air is directed to the point of use.

The invention provides a fluid compression system according to claim 1.

The invention also provides a method of operating a fluid compression system that delivers compressed fluid to a point of use. The method includes measuring a pressure of the compressed fluid at the point of use with a first sensor, initiating operation of a refrigerated dryer at least partially in response to the measured pressure, and initiating operation of a compressor after initiating operation of the refrigerated dryer. The compressor is operable to produce a first flow of compressed fluid. The method also includes directing the flow of compressed fluid to the refrigerated dryers, separating the first flow of compressed fluid into a second flow of compressed fluid and a flow of liquid using the refrigerated dryer, and stopping operation of the compressor and the refrigerated dryer at least partially in response to the pressure measured at the point of use.

Other aspects of the invention will become apparent by consideration of the detailed description and accompanying drawings.

### BRIEF DESCRIPTION OF THE DRAWINGS

Fig. 1 is a schematic representation of a fluid compression system according to the invention;

Fig. 2 is a graph of pressure versus time during operation of the fluid compression system according to one construction of the invention;

Fig. 3 is a flow chart illustrating a portion of a first control scheme;

Fig. 4 is a flow chart illustrating a portion of a second control scheme;

Fig. 5 is a flow chart illustrating a portion of a control scheme that follows either the first control scheme or the second control scheme;

Fig. 6 is a flow chart illustrating a portion of an alternative control scheme that follows either the first control scheme or the second control scheme.

Before any constructions of the invention are explained in detail, it is to be understood that the invention is not limited in its application to the details of construction and the arrangement of components set forth in the following description or illustrated in the following drawings. The invention is capable of other constructions and of being practiced or of being carried out in various ways. Also, it is to be understood that the phraseology and terminology used herein is for the purpose of description and should not be regarded as limiting.

### DETAILED DESCRIPTION

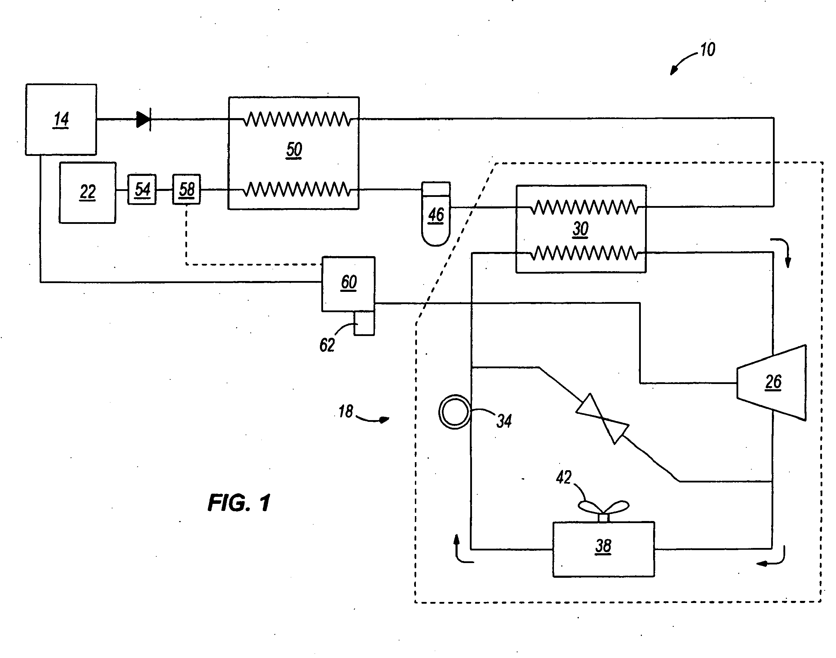

Fig. 1 illustrates one possible arrangement of a fluid compression system 10 that includes a compressor 14 and a refrigerated dryer 18 that cooperate to provide dry compressed fluid or gas to a system or point of use 22. In a preferred construction, the point of use 22 includes a tank, a reservoir, and the like. However, in alternate constructions, the point of use 22 may include one or more injection molding machines, pneumatic equipment, pneumatic tools, pneumatic actuators, pneumatic controls, and the like. In addition, the fluid or gas is preferably air although other fluids or gases have been considered.

The compressor 14 may include a single compressor or a plurality of compressors arranged in parallel and/or series to output a flow of compressed air at a desired flow rate and pressure. In addition, the compressor 14 may include a rotary compressor such as a rotary screw compressor, a centrifugal compressor, a reciprocating compressor, or another compressor design or combinations thereof. Thus, the invention should not be limited by the type, quantity, or arrangement of the compressor 14 or compressors.

The refrigerated dryer 18 of Fig. 1 includes a refrigerant compressor 26, an evaporator 30, an expansion device 34, and a condenser 38 arranged in a manner similar to a standard refrigeration cycle. The refrigerant compressor 26 may include one or more compression devices that are suited to compressing a refrigerant to produce a flow of refrigerant. For example, one or more rotary screw compressors and/or one or more scroll compressors could be employed as the refrigerant compressor 26. Of course, other types of compressors or combinations of compressors not described herein could be employed as refrigerant compressors 26 if desired.

The condenser 38 cools the refrigerant to remove a portion of the heat of compression. In the illustrated arrangement, a fan 42 is employed to cool the refrigerant. The fan 42 may be operated continuously, intermittently, or at variable speeds to achieve the desired level of cooling of the refrigerant. In preferred constructions, at least a portion of the refrigerant condenses within the condenser 38 such that a flow of liquid refrigerant exits the condenser 38. As one of ordinary skill in the art will realize, many heat exchanger designs could be employed in the condenser 38. For example, finned-tube heat exchangers, shell and tube heat exchangers, plate-fin heat exchangers, micro-channel heat exchangers, and the like could be employed within the condenser 38. Thus, the invention should not be limited by the type of heat exchanger employed.

The expansion device 34 is positioned downstream of the condenser 38 such that it receives a flow of high-pressure liquid refrigerant that has passed through the condenser 38. The expansion device 34 causes a rapid expansion of the refrigerant which produces a corresponding drop in the temperature of the refrigerant after it exits the expansion device 34.

Operating as a standard refrigeration cycle, the system 18 produces a flow of cool refrigerant through the evaporator 30. Compressed air supplied by the air compressor 26 flows through the evaporator 30 and is cooled by the refrigerant. The water vapor in the compressed air condenses in the air stream and is separated and removed from the compressed air using a liquid-gas separation device 46. This process produces a flow of dry compressed air and a flow of liquid. While many liquid-gas separation systems are possible, mechanical separation that relies on variations in the mass and inertia of the liquid and gas such as cyclone-type separators are preferred. Of course, other separators such as coalescing filters can be used in conjunction with or in place of the mechanical separation device. As such, the invention should not be limited to one type of separation system.

The air then passes through a recuperator 50 where it is heated slightly such that the exiting air stream at an air outlet 54 is at a temperature above its dew point. The recuperator 50 includes a heat exchanger that receives the hot flow of compressed air from the compressor 14 and discharges a pre-cooled flow of compressed air. The heat exchanger also receives the flow of cool dry compressed air and heats it such that the discharged dry air is at a temperature well above its dew point temperature, thereby reducing the likelihood of additional condensation during use. Thus, the recuperator 50 reduces the load on the evaporator 30 by pre-cooling the incoming air, thereby allowing for a smaller evaporator 30 and/or refrigerated dryer 18. As one of ordinary skill in the art will realize, many different heat exchanger arrangements, including finned-tube heat exchangers, shell and tube heat exchangers, plate-fin heat exchangers, micro-channel heat exchangers, and the like may be employed in the recuperator 50.

As one of ordinary skill in the art will realize, other components or systems that are commonly employed in refrigeration systems could also be employed in the present arrangement. For example, a vessel could be positioned in the cycle to collect excess refrigerant and serve as a reservoir. Additionally, check valves, sensors, and controls could be positioned at various points along the refrigerated dryer 18 if desired.

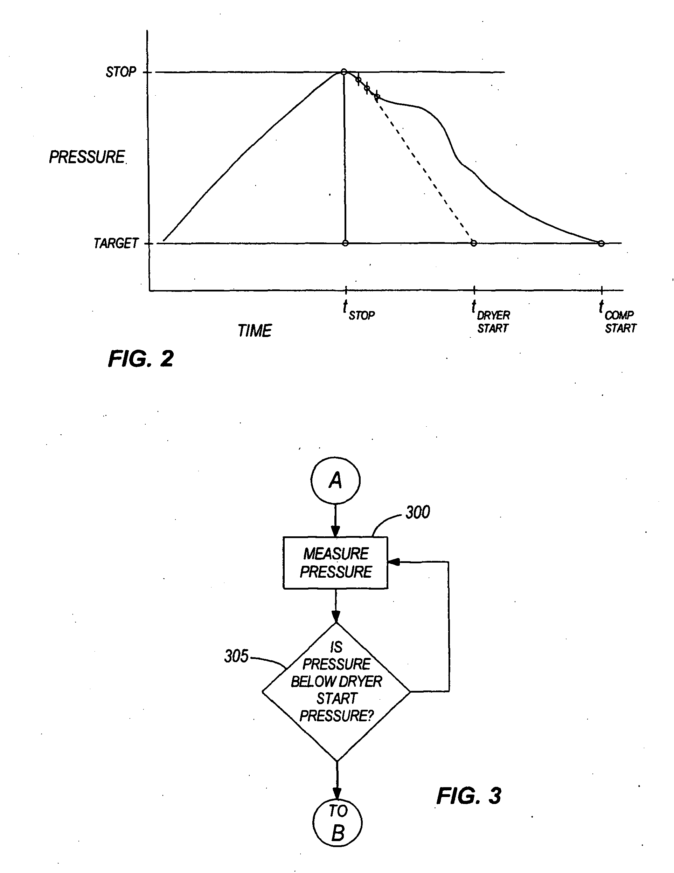

Fig. 2 graphically illustrates the operation of one construction of the system of Fig. 1. A controller 60 monitors the fluid compression system 10 to determine when to start or stop the compressor 14. The controller 60 also controls operation of the refrigerated dryer 18. In preferred constructions, the controller 60 employs a base control scheme that allows for starting the refrigerated dryer 18 before starting the compressor 14. Each of the base control schemes includes several variations that can be employed in any of the base control schemes as may be required by the particular application.

One base control scheme (partially illustrated in Fig. 3) employs the controller 60 to monitor the fluid compression system 10 with a sensor 58 to determine when to initiate operation of the compressor 14. The sensor 58 can be a sensor adapted to measure pressure, rate of change of pressure, temperature, time, or other properties and can be positioned upstream or near the point of use 22, such as within the reservoir or tank. In the preferred construction, sensor 58 is a pressure sensor. When the sensor 58 detects that the pressure within the fluid compression system 10 has fallen below a pre-determined threshold level, the refrigerated dryer 18 is started. For example, in one system it is desirable to supply compressed air between 100 pounds per square inch (psi) (0.69 MPa) and 120 psi (0.83 MPa). In this system, the operation of the refrigerated dryer 18 could be started when the measured pressure falls below 105 psi (0.72 MPa). The refrigerated dryer 18 would then operate until the compressor 14 started operation and would continue to operate throughout the operating period of the compressor 14. The pressure at which the refrigerated dryer 18 starts can be adjusted based on the particular system to assure that the refrigerant reaches the desired temperature just as the compressor 14 starts operation. The sensor 58 generally measures the air pressure at the point of use 22. However, the air pressure may be measured at one or more locations within the system by use of one or more sensors 58. In addition, the one or more sensors 58 may measure any number of properties and combinations of properties, such as time and rate of change of pressure.

Operation of the refrigerated dryer 18 may be initiated at a pressure that allows for a specified amount of time for the refrigerant to cool before the compressor 14 is operated. In an alternative arrangement, the refrigerated dryer 18 is operated for a specified amount of time to allow the refrigerant to reach a specific temperature before operation of the compressor 14 is started. Thus, a timer 62 62 is employed to start the compressor 14 after the passage of a predetermined period of time following the start of the dryer 18. This arrangement assures that the refrigerant reaches the desired temperature and reduces the amount of time the refrigerated dryer 18 operates without operation of the compressor 14. In other constructions, a second measured pressure is employed to start the compressor 14. In these constructions, the timer 62 can be used to shutdown the dryer 18 if the compressor 14 does not start in a predetermined time period. Thus, the dryer 18 will operate until the pressure falls below a second predetermined pressure at which point the compressor 14 starts. In still other constructions, a temperature sensor measures a temperature within the dryer 18 and starts the compressor 14 when the measured temperature reaches a desired temperature.

The first control scheme can be used with one compressor 14 or a plurality of compressors. The controller 60 can monitor the fluid pressure within the compression system 10 via sensors 58 and operate the refrigerated dryer 18 and the compressor 14 as necessary. In another alternative arrangement, the refrigerated dryer 18 operates for a specific amount of time such that the refrigerated dryer 18 will stop after a pre-determined amount of time if the compressor 14 does not start. This arrangement assures that the refrigerated dryer 18 will not operate longer than the necessary demands of the compressor 14 would dictate.

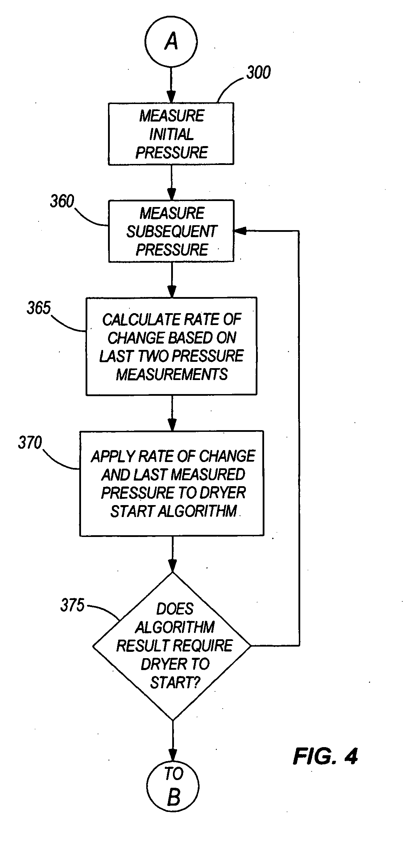

Another base control scheme (partially illustrated in Fig. 4) employs the controller 60 to monitor the rate-of-change of the air pressure at one or more measuring points in the fluid compression system 10. The air pressure can be measured by the sensor 58 located virtually anywhere within the fluid compression system 10 with a measurement at the point of use 22 being preferred. The controller 60 uses the measured air pressure and the rate-of-change of the air pressure to predict when the compressor 14 will need to be operated for additional compressed air. Using the above-described example, if the refrigerated dryer 18 requires five minutes to cool the refrigerant to the desired level and the measured rate of change of the pressure in the fluid compression system 10 is 1 psi (0.007 MPa) per minute, the controller 60 will start the refrigerated dryer 18 when the measured pressure is 5 psi (0.034 MPa) above the desired minimum pressure.

As with other control schemes described herein, the refrigerated dryer 18 operates continuously until the pressure reaches the level at which the compressor 14 begins operation. The refrigerated dryer 18 and the compressor 14 then preferably operate until the compressor 14 is stopped. In an alternative construction, the refrigerated dryer 18 may be started as described. However, in addition to starting the refrigerated dryer 18, a timer 62 may initiate to control the start of the compressor 14 such that the compressor 14 begins operating a predetermined time after the start of the refrigerated dryer 18. In still other constructions, a temperature sensor measures a temperature within the dryer 18 and initiates operation of the compressor 14 when the temperature reaches a desired value.

In some constructions, a second sensor monitors a temperature within the refrigerated dryer 18. For example, the second sensor could measure the refrigerant temperature anywhere within the refrigerated dryer 18 such as downstream of the refrigerant compressor 26 or could measure the temperature within the evaporator 30. This second measured property could be used to calculate the amount of time the refrigerated dryer 18 needs to reach the desired operating temperature. This calculated time could be used to vary the pressure at which the refrigerated dryer 18 starts operation. Such a measurement could be employed using any control scheme described herein.

Figs. 3-6 illustrate portions of some of the control schemes discussed herein. Of course many different variations are possible and may be suitable for use. For example, one alternative incorporates a temperature measurement taken from the refrigerated dryer 18 that is then used in an algorithm to vary the starting pressure of the refrigerated dryer 18. Thus, when the refrigerated dryer 18 is hotter, it will run longer to achieve the desired level of cooling before starting the compressor 14.

The additional amount of time for the refrigerated dryer 18 to operate before the compressor 14 is started allows the evaporator 30 to cool in advance of operation of the compressor 14 such that air is effectively dried beginning at the time the compressor 14 starts. This avoids a spike in dew point of the system air. In each control scheme, the compressor 14 is not delayed in operating, rather the refrigerated dryer 18 is started a pre-determined amount of time before the compressor 14 is needed.

In some constructions, the refrigerated dryer 18 is controlled independent of the compressor 14 such that the refrigerated dryer 18 is operated for a pre-determined amount of time and stops automatically regardless of whether or not the compressor 14 is operated.

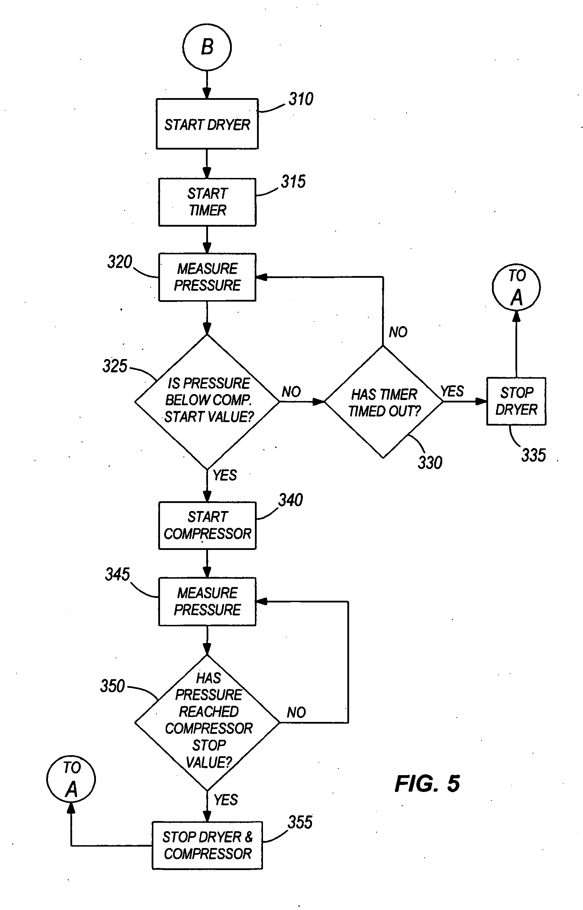

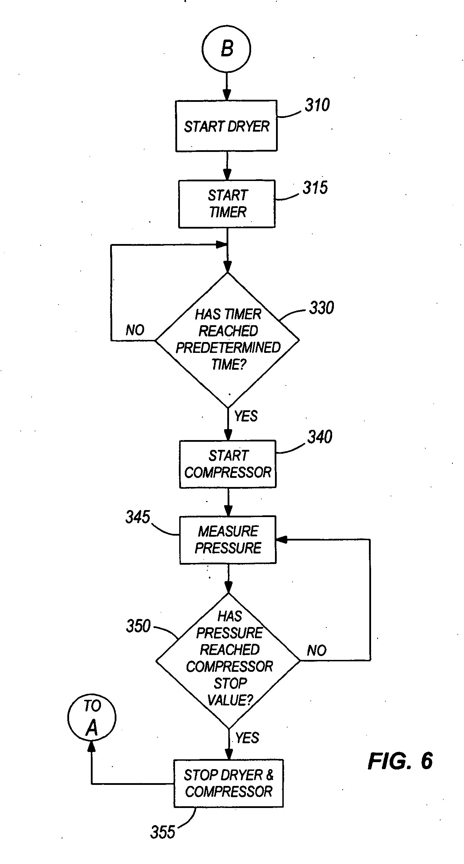

In operation, and as illustrated in Fig. 3, one system measures a pressure at block 300. Preferably, the pressure is measured at or near the point of use. The measured pressure is then compared to a first predefined pressure value or a dryer start pressure at block 305. If the pressure is not below the dryer start pressure, the measurement is retaken and the new measured pressure is compared to the first predefined pressure. If the measured pressure falls below the first predefined pressure, the control starts the dryer (block 310) and moves to the steps illustrated in Fig. 5 or Fig. 6.

With reference to Fig. 5, the control starts a timer 62 (block 315) after the start of the dryer and continues to measure the pressure at block 320. The measured pressure is compared to a second predefined value or a compressor start value at block 325. In addition, the timer 62 value is compared to a predefined time limit at block 330. If the timer 62 reaches the predefined time limit before the pressure reaches the second predefined value, the dryer is stopped (block 335). However, if the pressure falls below the second predefined pressure before the timer 62 reaches the predefined time limit, the compressor is started (block 340). The pressure is then measured and compared to a third predefined pressure or compressor stop pressure (blocks 345 and 350). When the pressure reaches the third predefined pressure, the dryer and the compressor are stopped (block 355) and the control returns to the status of Fig. 3.

In some constructions, the timer 62 is used to start the compressor rather than to stop the dryer. In this construction, illustrated in Fig. 6, the timer 62 is monitored (block 330) until it reaches the predetermined time, at which point the compressor is started (block 340). In yet another construction, the timer 62 is eliminated and the pressure is used to start the compressor. In this construction, the pressure is monitored until it reaches the third predetermined pressure, at which point the compressor is started (block 340). In still another construction, a temperature of the dryer is measured rather than the pressure. In this construction, the compressor is started at block 340 when the measured temperature falls below a predetermined temperature. Thus, blocks 315 and 330 of Fig. 6 can be replaced with temperature measurement and comparison blocks or pressure measurement and comparison blocks if desired.

In another construction, the control system monitors the system as illustrated in Fig. 4. In this construction, the control system measures an initial pressure at block 300 and then measures a subsequent pressure some time later (block 360). The two measured pressures are then used to determine a rate of change of pressure as illustrated at block 365. The rate of change and the last measured pressure are then provided to an algorithm that estimates when the compressor and the dryer will need to be started (block 370). If the algorithm determines that the dryer should be started (block 375), the control transitions to the steps illustrated in Fig. 5 or Fig 6. If the algorithm does not require the start of the dryer, a new pressure is measured and the process continues.

It should be noted that some constructions also monitor a temperature of the dryer to estimate how long it will need to operate to reach a desired operating temperature. In these constructions, the dryer may start earlier or later depending on its temperature. The algorithm of block 370 could account for this input.

It should be noted that the term "dry air" is used herein to describe air that has passed through the refrigerated dryer 18. However, as one of ordinary skill in the art will realize, dry air is not devoid of water or water vapor. Rather, dry air is air that has had a portion of the moisture removed to reduce the likelihood of additional moisture condensing from the compressed air during use.

Thus, the invention provides, among other things, a fluid compression system that delivers compressed dry fluid or gas to a system or point of use. Various features and advantages of the invention are set forth in the following claims.

## Claims

1. A fluid compression system. (10) comprising:
a compressor (14) operable to produce a first flow of compressed fluid;
a refrigerated dryer (18) coupled to the compressor (14) and operable to separate the first flow of compressed fluid into a second flow of compressed fluid and a flow of liquid;
a point-of-use (22) positioned to receive and store the second flow of compressed fluid for use;
a first sensor (58) positioned to measure a pressure at the point-of-use (22) where the second flow of compressed fluid is stored; and
a controller (60) operable to initiate operation of the refrigerated dryer (18) at a first time and at least partially in response to the measured pressure, and to initiate operation of the compressor (14) at a second time, wherein the first time is before the second time.

2. The fluid compression system (10) of claim 1, wherein the first flow of compressed fluid includes a mixture of air and a first amount of water vapor.

3. The fluid compression system (1.0) of claim 2, wherein the second flow of compressed fluid includes air and a second amount of water vapor, the second amount of water vapor being less than the first amount of water vapor.

4. The fluid compression system (10) of claim 3, wherein the flow of liquid includes condensed water vapor removed from the first amount of water vapor.

5. The fluid compression system (10) of claim 1, wherein the controller (60) is operable to stop the refrigerated dryer (18) and the compressor (14) at least partially in response to the measured pressure.

6. The fluid compression system (10) of claim 1, wherein the controller (60) is operable to start the compressor (14) at least partially in response to the passage of a predetermined length of time after the first time.

7. The fluid compression system (10) of claim 1, wherein the controller (60) is operable to stop the refrigerated dryer (18) and the compressor (14) substantially simultaneously.

8. The fluid compression system (10) of claim 1, wherein the controller (60) calculates a rate of change of pressure based on the measured pressure.

9. A method of operating a fluid compression system (10) that delivers compressed fluid to a point of use (22), the method comprising:
measuring a pressure of the compressed fluid at the point of use (22) with a first sensor (58);
initiating operation of a refrigerated dryer (18) at least partially in response to the measured pressure;
initiating operation of a compressor (14) after initiating operation of the refrigerated dryer (18), the compressor (14) operable to produce a first flow of compressed fluid;
directing the flow of compressed fluid to the refrigerated dryer (18);
separating the first flow of compressed fluid into a second flow of compressed fluid and a flow of liquid using the refrigerated dryer (18); and
stopping operation of the compressor (14) and the refrigerated dryer (18) at least partially in response to the pressure measured at the point of use.

10. The method of operating the fluid compression system (10) of claim 9, further comprising calculating a rate of change of pressure based at least partially on the measured pressure.

11. The method of operating the fluid compression system (10) of claim 9, further comprising monitoring the passage of time from the initiation of the dryer (18) and initiating operation of the compressor (14) after the passage of a predetermined period of time.

12. The method of operating the fluid compression system (10) of claim 9, wherein the step of stopping the compressor (14) and the refrigerated dryer (18) includes stopping the compressor (14) and the refrigerated dryer (18) substantially simultaneously.

13. The method of operating the fluid compression system (10) of claim 9, further comprising measuring a temperature of the refrigerated dryer (18) and starting the compressor (14) at least partially in response to the measured temperature.

14. The method of operating the fluid compression system (10) of claim 9, further comprising remeasuring the pressure and starting the compressor (14) at least partially in response to the remeasured pressure.

## Patentansprüche

1. Fluidverdichtungssystem (10), das aufweist:
einen Verdichter (14), der funktionsfähig ist, um einen ersten Strom des verdichteten Fluids zu erzeugen;
einen Kühltrockner (18), der mit dem Verdichter (14) verbunden und funktionsfähig ist, um den ersten Strom des verdichteten Fluids in einen zweiten Strom des verdichteten Fluids und einen Flüssigkeitsstrom zu trennen;
eine Verwendimgsstelte (22), die positioniert ist, um den zweiten Strom des verdichteten Fluids für eine Verwendung aufzunehmen und zu speichern;
einen ersten Sensor (58), der positioniert ist, um einen Druck an der Verwendungsstelle (22) zu messen, wo der zweite Strom des verdichteten Fluids gespeichert wird; und
einen Regler (60), der funktionsfähig ist, um den Betrieb des Kühltrockners (18) zu einem ersten Zeitpunkt und mindestens teilweise als Reaktion auf den gemessenen Druck einzuleiten, und um den Betrieb des Verdichters (14) zu einem zweiten Zeitpunkt einzuleiten, wobei der erste Zeitpunkt vor dem zweiten Zeitpunkt liegt.

2. Fluidverdichtungssystem (10) nach Anspruch 1, bei dem der erste Strom des verdichteten Fluids eine Mischung von Luft und einer ersten Menge an Wasserdampf umfasst.

3. Fluidverdichtungssystem (10) nach Anspruch 2, bei dem der zweite Strom des verdichteten Fluids Luft und eine zweite Menge an Wasserdampf umfasst, wobei die zweite Menge an Wasserdampf geringer ist als die erste Menge an Wasserdampf.

4. Fluidverdichtungssystem (10) nach Anspruch 3, bei dem der Flüssigkeitsstrom kondensierten Wasserdampf umfasst, der aus der ersten Menge des Wasserdampfes entfernt wurde.

5. Fluidverdichtungssystem (10) nach Anspruch 1, bei dem der Regler (60) funktionsfähig ist, um den Kühltrockner (18) und den Verdichter (14) mindestens teilweise als Reaktion auf den gemessenen Druck abzuschalten.

6. Fluidverdichtungssystem (10) nach Anspruch 1, bei dem der Regler (60) funktionsfähig ist, um den Verdichter (14) mindestens teilweise als Reaktion auf das Verstreichen einer vorgegebenen Zeitdauer nach dem ersten Zeitpunkt in Betrieb zu nehmen.

7. Fluidverdichtungssystem (10) nach Anspruch 1, bei dem der Regler (60) funktionsfähig ist, um den Kühltrockner (18) und den Verdichter (14) im Wesentlichen gleichzeitig abzuschalten.

8. Fluidverdichtungssystem (10) nach Anspruch 1, bei dem der Regler (60) eine Geschwindigkeit der Veränderung des Druckes auf der Basis des gemessenen Druckes berechnet.

9. Verfahren zum Betätigen eines Fluidverdichtungssystems (10), das das verdichtete Fluid zu einer Verwendungsstelle (22) liefert, wobei das Verfahren die folgenden Schritte aufweist:
Messen eines Druckes des verdichteten Fluids an der Verwendungsstelle (22) mit einem ersten Sensor (58);
Einleiten des Betriebes eines Kühltrockners (18) mindestens teilweise als Reaktion, auf den gemessenen Druck;
Einleiten des Betriebes eines Verdichters (14) nach dem Einleiten des Betriebes des Kühltrockners (18), wobei der Verdichter (14) funktionsfähig ist, um einen ersten Strom des verdichteten Fluids zu erzeugen;
Lenken des Stromes des verdichteten Fluids zum Kühltrockner (18);
Trennen des ersten Stromes des verdichteten Fluids in einen zweiten Strom des verdichteten Fluids und einen Flüssigkeitsstrom bei Benutzung des Kühltrockners (18); und
Abschalten des Betriebes des Verdichters (14) und des Kühltrockners (18) mindestens teilweise als Reaktion auf den Druck, der an der Verwendungsstelle gemessen wird.

10. Verfahren zum Betätigen des Fluidverdichtungssystems (10) nach Anspruch 9, das außerdem den Schritt des Berechnens einer Geschwindigkeit der Veränderung des Druckes aufweist, basierend mindestens teilweise auf dem gemessenen Druck.

11. Verfahren zum Betätigen des Fluidverdichtungssystems (10) nach Anspruch 9, das außerdem die Schritte des Überwachens des Verstreichens der Zeit ab der Inbetriebnahme des Trockners (18) und des Einleitens des Betriebes des Verdichters (14) nach dem Verstreichen einer vorgegebenen Zeitdauer aufweist.

12. Verfahren zum Betätigen des Fluidverdichtungssystems (10) nach Anspruch 9, bei dem der Schritt des Abschaltens des Verdichters (14) und des Kühltrockners (18) den Schritt des Abschaltens des Verdichters (14) und des Kühltrockners (18) im Wesentlichen gleichzeitig umfasst.

13. Verfahren zum Betätigen des Fluidverdichtungssystems (10) nach Anspruch 9, das außerdem die Schritte des Messens einer Temperatur des Kühltrockners (18) und der Inbetriebnahme des Verdichters (14) mindestens teilweise als Reaktion auf die gemessene Temperatur aufweist.

14. Verfahren zum Betätigen des Fluidverdichtungssystems (10) nach Anspruch 9, das außerdem die Schritte des Nachmessens des Druckes und der Inbetriebnahme des Verdichters (14) mindestens teilweise als Reaktion auf den nachgemessenen Druck aufweist.

## Revendications

1. Système de compression d'un fluide (10), comprenant:
un compresseur (14) servant à produire un premier écoulement de fluide comprimé ;
un dessiccateur réfrigéré (18), accouplé au compresseur (14) et servant à séparer le premier écoulement de fluide comprimé en un deuxième écoulement de fluide comprimé et un écoulement de liquide ;
un point d'utilisation (22) positionné de sorte à recevoir et stocker le deuxième écoulement de fluide comprimé en vue de son utilisation ;
un premier capteur (58), positionné de sorte à mesurer une pression au niveau du point d'utilisation (22), où est stocké le deuxième écoulement de fluide comprimé ; et
un dispositif de commande (60), servant à initialiser le fonctionnement du dessiccateur réfrigéré (18) lors d'un premier temps, et au moins en partie en réponse à la pression mesurée, et à initialiser le fonctionnement du compresseur (14) lors d'un deuxième temps, le premier temps se situant avant le deuxième temps.

2. Système de compression d'un fluide (10) selon la revendication 1, dans lequel le premier écoulement du fluide comprimé englobe un mélange d'air et d'une première quantité de vapeur d'eau.

3. Système de compression d'un fluide (10) selon la revendication 2, dans lequel le deuxième écoulement de fluide comprimé englobe de l'air et une deuxième quantité de vapeur d'eau, la deuxième quantité de vapeur d'eau étant inférieure à la première quantité de vapeur d'eau.

4. Système de compression d'un fluide (10) selon la revendication 3, dans lequel l'écoulement de liquide englobe de la vapeur d'eau condensée éliminée de la première quantité de vapeur d'eau.

5. Système de compression d'un fluide (10) selon la revendication 1, dans lequel le dispositif de commande (60) sert à arrêter le dessiccateur réfrigéré (18) et le compresseur (14), au moins en partie en réponse à la pression mesurée.

6. Système de compression d'un fluide (1.0) selon la revendication 1, dans lequel le dispositif de commande (60) est destiné à démarrer le compresseur (14), au moins en partie en réponse au passage d'une période de temps prédéterminée après la première période de temps.

7. Système de compression d'un fluide (10) selon la revendication 1, dans lequel le dispositif de commande (60) sert à arrêter le dessiccateur réfrigéré (18) et le compression (14) de manière pratiquement simultanée.

8. Système de compression d'un fluide (10) selon la revendication 1, dans lequel le dispositif de commande (60) calcule un taux de changement de la pression sur la base de la pression mesurée.

9. Procédé d'actionnement d'un système de compression d'un fluide (10), amenant un fluide comprimé vers un point d'utilisation (22), le procédé comprenant les étapes ci-dessous :
mesure d'une pression du fluide comprimé au niveau du point d'utilisation (22) par l'intermédiaire d'un premier capteur (58) ;
initialisation du fonctionnement d'un dessiccateur réfrigéré (18), au moins en partie en réponse à la pression mesurée ;
initialisation d'un compresseur (14) après l'opération d'initialisation du dessiccateur réfrigéré (18), le compresseur (14) servant à produire un premier écoulement de fluide comprimé ;
direction de l'écoulement de fluide comprimé vers le dessiccateur réfrigéré (18) ;
séparation du premier écoulement de fluide comprimé en un deuxième écoulement de fluide comprimé et un écoulement de liquide par l'intermédiaire du dessiccateur réfrigéré (18) ; et
arrêt du fonctionnement du compresseur (14) et du dessiccateur réfrigéré (18), au moins en partie en réponse à la pression mesurée au niveau du point d'utilisation.

10. Procédé d'actionnement du système de compression d'un fluide (10) selon la revendication 9, comprenant en outre l'étape de calcul d'un taux de changement de la pression, au moins en partie sur la base de la pression mesurée.

11. Procédé d'actionnement du système de compression d'un fluide (10) selon la revendication 9, comprenant en outre l'étape de surveillance du passage du temps entre l'initialisation du dessiccateur (18) et l'opération d'initialisation du compresseur (14) après le passage d'une période de temps prédéterminée.

12. Procédé d'actionnement du système de compression d'un fluide (10) selon la revendication 9, dans lequel l'étape d'arrêt du compresseur (14) et du dessiccateur réfrigéré (18) englobe l'étape d'arrêt du compresseur (14) et du dessiccateur réfrigéré (18), de manière pratiquement simultanée.

13. Procédé d'actionnement du système de compression d'un fluide (10) selon la revendication 9, comprenant en outre les étapes de mesure d'une température du dessiccateur réfrigéré (18) et de démarrage du compresseur (14), au moins en partie en réponse à la température mesurée.

14. Procédé d'actionnement du système de compression d'un fluide (10) selon la revendication 9, comprenant en outre les étapes de remesure de la pression et de démarrage du compresseur (14), au moins en partie en réponse à la pression remesurée.
